# EUROPÄISCHE PATENTSCHRIFT

(11) **EP 3 114 017 B1**
(45) Veröffentlichungstag und Bekanntmachung des Hinweises auf die Patenterteilung: **20.01.2021**
(21) Anmeldenummer: 15713136.8
(22) Anmeldetag: 06.03.2015
(51) Int. Cl.: B23P 21/00, B62D 65/02

(54) **FERTIGUNGSSTATION, FERTIGUNGSANLAGE UND VERFAHREN**
MANUFACTURING STATION, MANUFACTURING PLANT AND METHOD
POSTE DE PRODUCTION, USINE DE PRODUCTION ET PROCÉDÉ

(30) Priorität: 06.03.2014 DE 102014102990; 06.03.2014 DE 202014101003 U
(43) Veröffentlichungstag der Anmeldung: 11.01.2017
(73) Patentinhaber: KUKA Systems GmbH, 86165 Augsburg (DE)
(72) Erfinder: THORWARTH, Paul, 86154 Augsburg (DE)
(74) Vertreter: Ernicke, Klaus Stefan
(86) Internationale Anmeldenummer: PCT/EP2015/054705
(87) Internationale Veröffentlichungsnummer: WO 2015/132378

(56) Entgegenhaltungen:
- EP-A1- 1 775 066
- EP-A1- 2 340 982
- WO-A1-2013/168706
- DE-A1- 3 614 165
- DE-A1-102004 029 665
- DE-U1-202005 003 913
- DE-U1-202007 002 365
- DE-U1-202007 015 654
- DE-U1-202008 012 602
- US-A- 5 539 975
- US-A1- 2012 318 954

## Beschreibung

Fertigungsstation, Fertigungsanlage und Verfahren Die Erfindung betrifft eine Fertigungsstation, eine Fertigungsanlage und ein Verfahren mit den Merkmalen im Oberbegriff der Verfahrens- und Vorrichtungshauptansprüche.

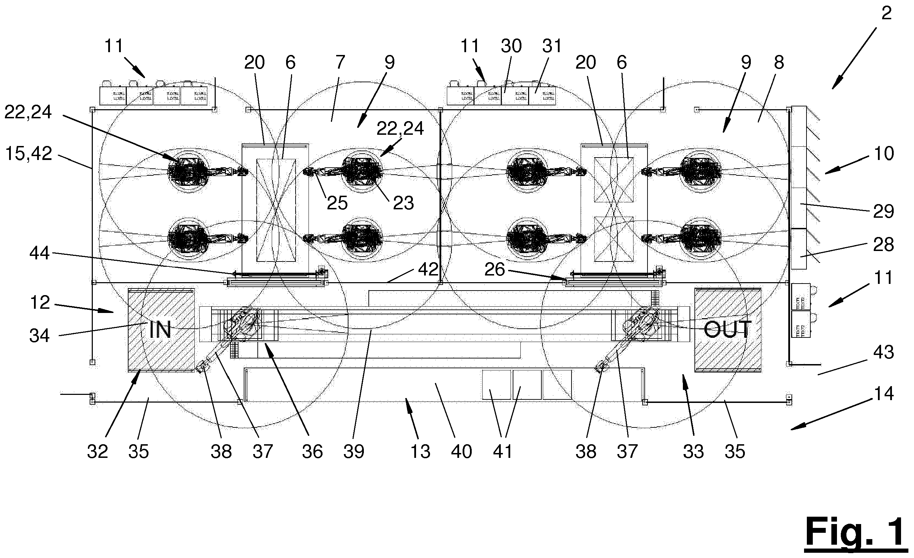

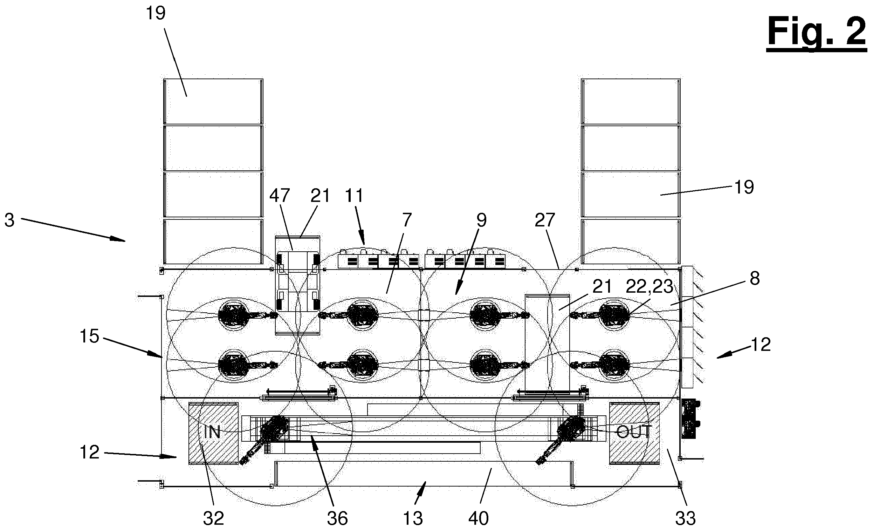

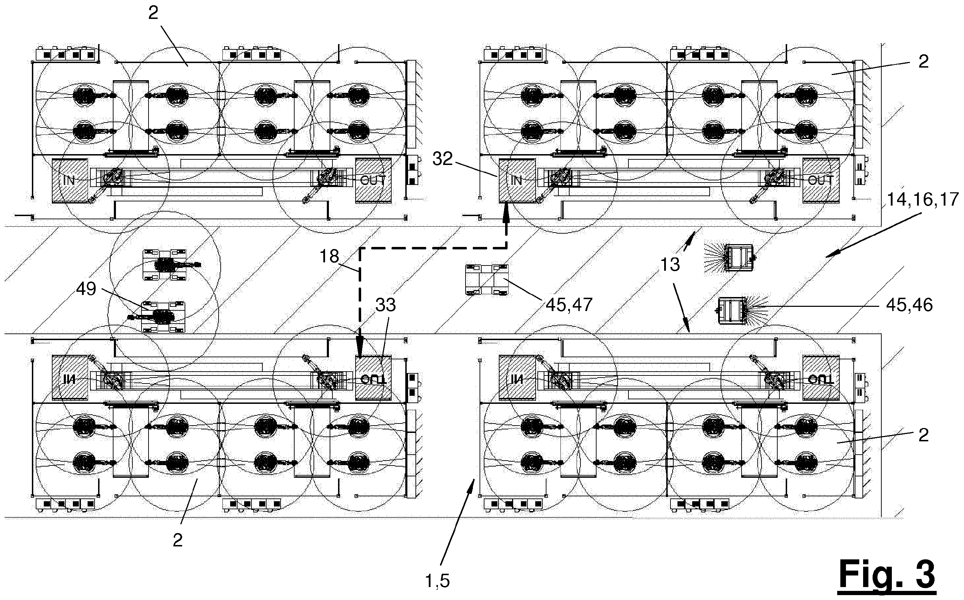

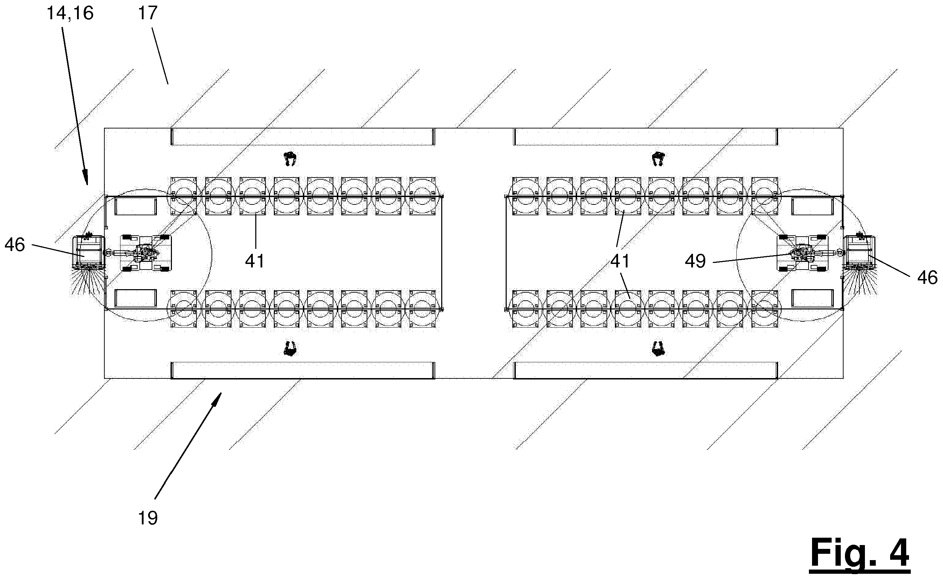

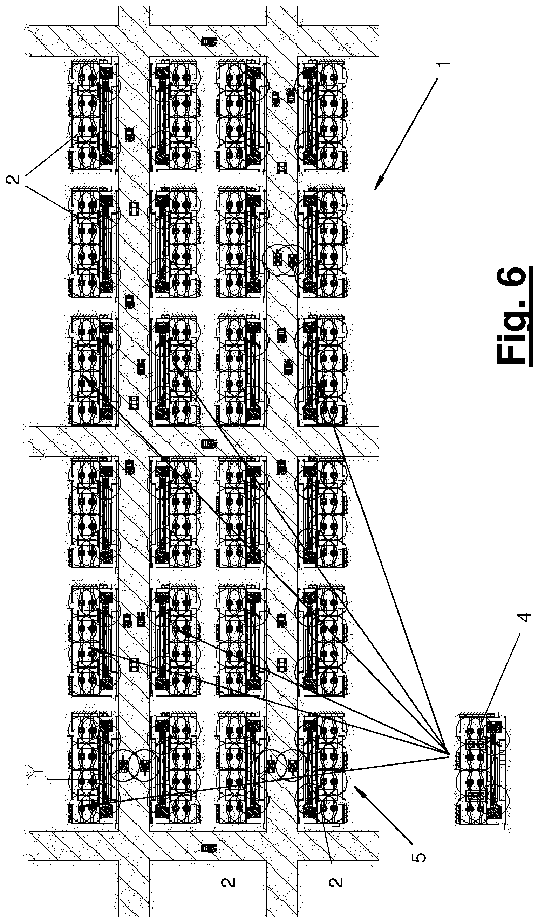

Aus der Praxis sind Fertigungsstationen in Form von Robotergärten bekannt, wobei eine Reihe von einzelnen Roboterzellen in einer Reihe angeordnet und untereinander in Serie durch eine feste Verkettung und gemeinsam bediente Werkstückablagen verbunden sind. Die DE 10 2004 029665 zeigt (Die Angaben in den Klammern beziehen sich auf dieses Dokument)eine Fertigungsstation (par.18) für Werkstücke (Anspruch 1 & pos.WS), insbesondere Karosserieteile, wobei die Fertigungsstation (Fig.1,2) modular ausgebildet ist (Anspruch 1 & Fig.6 & pos.2,3,4,5) und mehrere, insbesondere zwei, integrierte Fertigungszellen (Fig.6 & Fig.3 pos.6,7,8) mit jeweils einem eigenen Prozessbereich (Fig.4) aufweist, wobei die Prozessbereiche untereinander im Grundaufbau einheitlich(par.6 & par.24 ff & Fig.33) ausgebildet sind.

Es ist Aufgabe der vorliegenden Erfindung, eine verbesserte Fertigungstechnik aufzuzeigen.
Die Erfindung löst diese Aufgabe mit den Merkmalen in den Verfahrens- und Vorrichtungshauptansprüchen.
Die beanspruchte Fertigungstechnik, d.h. die Fertigungsstation, die Fertigungsanlage und das Fertigungsverfahren, bieten eine größere Flexiblität für die in einer Fertigungsstation durchzuführenden Prozesse. Auch der Aufwand für die Erstellung und Anpassung einer Fertigungsstation an den dort durchzuführenden Bearbeitungsprozess kann signifikant vermindert werden. Außerdem ergeben sich Vorteile für eine bessere und flexiblere Verkettung von Fertigungsstationen untereinander.
Die Fertigungstechnik eignet sich besonders für einen Einsatz im Rohbau von Fahrzeugkarosserien. Sie bietet hierfür maximale Variabilität bei niedrigem Bau- uns Steueraufwand. Auch die Konzeption einer Fertigungsanlage aus mehreren Fertigungsstationen wird wesentlich vereinfacht und hinsichtlich Kosten-, Steuer- und Zeitaufwand verbessert.

Die beanspruchte Fertigungsstation kann einen prozessneutralen und taktzeitneutralen konstruktiven Grundaufbau und eine Basisprogrammierung haben. Sie lässt sich auf einfache Weise sowie schnell und kostengünstig an die jeweils stationsintern durchzuführenden ein oder mehreren Fertigungsprozesse anpassen. Hierfür kann es genügen, auf der Basis des Grundaufbaus ein adaptiertes Prozesstooling einzusetzen und auf die Basisprogrammierung eine Prozessprogrammierung aufzusetzen. Die Fertigungsstation kann dadurch in definierter Taktzeit ein quantifizierbares Prozesspotenzial erhalten. Dieses kann bei Bedarf auch schnell, kostengünstig und einfach wieder geändert werden.

Die beanspruchte konstruktive Ausbildung der Fügestation ist für die Vereinheitlichung und die Standardisierung von Vorteil. Die Einbindung von mehreren, insbesondere zwei, Fertigungszellen mit einer gemeinsamen und variablen Transportlogistik in einer Fertigungsstation hat hierfür besondere Vorteile. Insbesondere der Prozessbereich in den Fertigungszellen ist vereinheitlicht und kann schnell und einfach an die jeweiligen Prozesserfordernisse angepasst werden.

Durch eine einheitliche Aufnahmevorrichtung und an deren Peripherie vorgesehene Roboterarbeitsplätze kann auf einfache Weise ein variables Prozesspotenzial bereit gestellt werden, welches bedarfsweise an die Prozesserfordernisse angepasst werden kann. Hierfür kann insbesondere der Programmieraufwand vermindert werden. An den mehreren, z.B. vier Roboterarbeitsstellen kann eine einheitliche Positionsvorgabe für einen dort bedarfsweise anzuordnenden Industrieroboter vorgesehen sein. Dessen Ortsbezüge zur Aufnahmevorrichtung sind vereinheitlicht und vorgegeben, sodass auch der Programmieraufwand für die prozessbedingten Roboterbewegungen vereinfacht wird.

Die im Grundaufbau einheitlichen und lediglich an die jeweiligen Prozesserfordernisse adaptierten Fertigungsstationen können in einer Stationsmatrix angeordnet sein und über eine entsprechende Fördertechnik flexibel miteinander verkettet werden. Die im Rohbau bisher übliche Hartcodierung und starre Verkettung von einzelnen zellenartigen Fertigungsstationen kann zu Gunsten eines flexiblen Matrix-Rohbaus aufgegeben werden.

Die beanspruchte Fertigungstechnik bietet neben der Transport- und Verkettungsflexibilität der Fertigungsstationen auch den Vorteil kurzer Transportwege und einheitlicher bzw. standardisierter Eingabe- und Ausgabeschnittstellen der Fertigungsstationen. Dies ermöglicht den Einsatz einer automatisierten und programmierbaren Fördertechnik, vorzugsweise mit einzeln angetriebenen und individuell steuerbaren Fördermitteln. Die flexible Fördertechnik und Stationsverkettung hat außerdem den Vorteil, dass bei Ausfall einer Fertigungsstation, z.B. durch Störung, Überlastung oder dgl., die anderen Fertigungsstationen in der Stationsmatrix nicht oder nicht wesentlich betroffen sind und weiterarbeiten können. Ein Stillstand der kompletten Fertigungsanlage wie bei den bisherigen hartcodierten und festverketteten Fertigungsstationen im Stand der Technik kann vermieden werden.

Die beanspruchte Ausgestaltung der Fertigungsstationen bietet außerdem die Möglichkeit einer Variierung der Prozessinhalte und einer Abkopplungsmöglichkeit vom Fertigungstakt. Dank der mehreren integrierten Fertigungszellen können längerdauernde Prozesse stationsintern auf die Fertigungszellen verteilt werden, wobei auch ein stationsinterner Werkstücktransport möglich ist. Der stationsinterne Fertigungstakt kann dadurch länger als der innerhalb der Stationsmatrix bestehende und stationsübergreifende Fertigungs- und Fördertakt sein.

Andererseits können durch die Prozessflexibilität der Fertigungszellen auch Fertigungsprozesse durchgeführt werden, die kürzer als der stationsübergreifende Fertigungstakt dauern. Hierbei kann eine stationsinterne Zwischenspeicherung stattfinden. Außerdem können in den Prozessbereichen der Fertigungszellen jeweils ein Einzelprozess an einem Werkstück oder mehrere Fertigungsprozesse an gleichen Werkstücken parallel durchgeführt werden. Die einheitliche und standardisierte Grundausbildung der Fertigungsstationen und ihrer Fertigungszellen erlaubt eine immense Prozessvielfalt hinsichtlich Prozessinhalten, Zahl und Dauer der Prozesse.

In eine Fertigungsanlage können außer den einheitlichen und standardisierten Fertigungsstationen auch weitere spezielle Fertigungsstationen eingebunden sein. Dies kann z.B. eine Tryout-Station sein, die im Grundaufbau den einheitlichen und standardisierten Fertigungsstationen entspricht und in der die Prozessprogrammierung unter Einsatz des spezifischen Prozesstoolings erstellt wird. Dies kann insbesondere die Ablaufprogrammierung sowie die Bahnprogrammierung der im Prozessbereich eingesetzten Industrieroboter sowie des bevorzugt von mehreren Industrierobotern gebildeten Transportmittels der stationsinternen Transportlogistik betreffen.

Die Prozessprogrammierung kann dann per drahtloser oder kabelgebundener Datenleitung von der Tryout-Station an die für den späteren Serienbetrieb vorgesehene Fertigungsstation übermittelt und dort direkt implementiert werden. Mit der Tryout-Station können bei einer Änderung oder einem Wechsel der Fertigung und der Fertigungsprozesse nacheinander die verschiedenen Fertigungsstationen mit programmtechnischen Prozessinhalten bestückt werden. Dies kann auch auf Vorrat geschehen, sodass bei einem Fertigungswechsel alle Fertigungsstationen sehr schnell umgerüstet werden können, was kostenträchtige Stillstandszeiten minimiert. Außerdem können Testabläufe zeit- und kostensparend in der Tryout-Station durchgeführt werden.

Die Tryout-Station kann als separate und zusätzliche Station in der Fertigungsanlage vorgesehen sein. Sie kann auch bedarfsweise in die Stationsmatrix eingebunden werden und nach Beendigung des Tryout-Betriebs für die Serienfertigung herangezogen werden.

Eine andere spezielle Fertigungsstation kann für eine Sonderfertigung vorgesehen sein. Dies kann Nischenprodukte, Prototypen oder dgl. betreffen. Diese Sonderfertigungs-Station kann ebenfalls einen standardisierten konstruktiven Grundaufbau und eine Basisprogrammierung wie die anderen einheitlichen und standardisierten Fertigungsstationen haben und Zusatzkomponenten, wie eine angeschlossene Bauteilversorgung oder dgl. für einen zumindest teilweise autarken Betrieb haben. Außerdem ist es günstig, in den Fertigungszellen eine instationäre Aufnahmevorrichtung vorzusehen. Dies ermöglicht eine Vereinfachung und eine bedarfsweise schnelle Umrüstung des Prozessbereichs in den Fertigungszellen. Außerdem ergeben sich Vorteile für die Förderlogistik.

In einem eigenständigen Erfindungsaspekt ist eine Fertigungsanlage mit Fertigungsstationen für Werkstücke, insbesondere Karosserieteile, vorgesehen, die mehrere Fertigungsstationen aufweist, die einen untereinander einheitlichen konstruktiven Grundaufbau sowie eine einheitliche Basisprogrammierung, insbesondere ein einheitliches SPS-Betriebssystem, haben und an den jeweiligen Prozess durch ein Prozesstooling in ihren Prozess- und Logistikbereichen sowie durch eine aufgesetzte Prozessprogrammierung adaptiert sind. Ergänzend hierzu können ein oder mehrere nachfolgend genannte weitere Aspekte jeweils einzeln oder in geeigneter Kombination vorgesehen sein.

Die Fertigungsstationen können untereinander einheitlich ausgebildet sein.
Die Fertigungsstationen können gemäß der
Ausführungsbeispiele modular ausgebildet sein und zwei oder mehr Fertigungszellen beinhalten. Sie können alternativ anders ausgebildet sein und z.B. nur eine Fertigungszelle aufweisen. Sie können außerdem eine kombinierte Eingangs- und Ausgangsschnittstelle besitzen. Ferner kann die interne Transportlogistik entfallen oder anders ausgebildet sein. Ein Industrieroboter am Roboterarbeitsplatz kann als Zusatzfunktion auch die Zufuhr und Abgabe der Werkstücke sowie ggf. das Be- und Entladen der Fördermittel durchführen.

Die Fertigungsstationen können an einen gemeinsamen externen Logistikbereich mit einer Fördertechnik und einem Wegenetz angeschlossen sein.
Die Fertigungsstationen können in einer bevorzugt regelmäßigen Stationsmatrix angeordnet und verkettet sein. Die Fertigungsstationen können in der Stationsmatrix eine fördertechnische und daten- sowie programmtechnische Verkettung aufweisen.
Die Fördertechnik kann automatisierte und programmierbare Flurfördermittel und/oder Bahnfördermittel aufweisen, welche die Eingangs- und Ausgangsschnittstellen verschiedener Fertigungsstationen untereinander und ggf. mit einer Bauteilversorgung verbinden.

Die Fertigungsanlage kann außer den für die Serienproduktion standardisierten, einheitlichen Fertigungsstationen eine oder mehrere zusätzliche Fertigungsstationen für Sonderfertigungen, insbesondere Prototypenfertigung, aufweisen.

Die Fertigungsanlage kann eine Fertigungsstation für den Tryout aufweist, die gemäß der einheitlichen Fertigungsstationen ausgebildet ist und die mit den Fertigungsstationen (2) in der Fertigungsanlage, insbesondere in der Stationsmatrix, durch Datenleitungen für die Übermittlung der Prozessprogrammierung verbunden ist.

Die vorgenannte flexible Verkettung der
Fertigungsstationen ist zum einen fördertechnischer Art. Alle Fertigungsstationen und die Bauteilversorgung sind von der Fördertechnik und deren Flur- oder Bahnfördermitteln, kurz Fördermittel, auf dem Wegenetz einzeln und individuell erreichbar. Auch die Reihenfolge, in der mehrere Fertigungsstationen nacheinander von einem Fördermittel angefahren werden, kann beliebig gewählt werden. Ferner kann eine datentechnische sowie programmtechnische Verkettung bestehen. Die Fertigungsstationen können z.B. untereinander und mit der Fördertechnik Daten und Programme austauschen.

Ein durchzuführender Fertigungsprozess kann sich über mehrere Fertigungsstationen erstrecken, z.B. bei der Fertigung von mehrteiligen Werkstücken oder Baugrupppen. Mehrere solcher Fertigungsprozesse können parallel und unabhängig voneinander ablaufen, z.B. bei einem Fertigungsmix von verschiedenen typbezogenen Baugruppen, z.B. von Unterbodengruppen für eine Limousine, ein Cabriolet etc.. Mehrere solcher Fertigungsprozesse können außerdem untereinander in einem mehrstufigen Fertigungsablauf verkettet sein. Hierbei können z.B. verschiedene zunächst parallel gefertigte Werkstücke bzw. Baugruppen zusammengeführt und zu einer größeren Baueinheit verbunden werden. In der Fertigungsanlage können mehrere solcher Fertigungsabläufe parallel durchgeführt werden. Diese Gestaltungsmöglichkeiten betreffen nicht nur die beispielhaft genannten Fügeprozesse, sondern beliebige Arten und auch Kombination von Prozessen, insbesondere Bearbeitungs- und Handhabungsprozessen.

Eine solche prozesstechnische Verkettung kann alle oder einen Teil der Fertigungsstationen betreffen. Mehrere Fertigungsstationen können prozesstechnisch zu einer Gruppe verkettet sein. Innerhalb der Fertigungsanblage können mehrere dieser prozesstechnisch verketteten Stationsgruppen vorhanden sein.

Der Logistikbereich bzw. die Fördertechnik kann ein Transportliniensystem aufweisen, in dem die automatischen Fördermittel liniengebunden verkehren, insbesondere zwischen prozesstechnisch untereinander und ggf. mit der Bauteilversorgung verketteten Fertigungsstationen. Besonders günstig ist eine Gliederung des Transportliniensystems in mehrere ringförmig geschlossene Transportlinien, in denen jeweils ein oder mehrere Fördermittel liniengebunden und bevorzugt in einem Kreislauf verkehren. Diese Gestaltungsvarianten verringern jeweils den Programmier- und Steueraufwand für die automatischen Fördermittel. Die Fördermittel fahren auf ihrer Transportlinie nur noch einen Teil der insgesamt vorhandenen Fertigungsstationen an. Dies verkürzt außerdem ihre Fahrwege und sorgt für eine bessere und schnellere Verfügbarkeit eines Transportmittels für den jeweiligen Transportjob.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine schematische Draufsicht auf eine standardisierte Fertigungsstation,
- Figur 2:: eine schematische Ansicht einer Fertigungsstation für eine Sonderfertigung,
- Figur 3:: einen Ausschnitt aus einer Fertigungsanlage und einer Stationsmatrix mit mehreren Fertigungsstationen und Fördertechnik,
- Figur 4:: eine schematische Darstellung einer Bauteilversorgung,
- Figur 5:: eine ausschnittsweise Darstellung einer Fertigungsanlage und einer Stationsmatrix in der Verkettung mit einer Bauteilversorgung und
- Figur 6:: eine Fertigungsstation für den Tryout und deren programmtechnische Anbindung an Fertigungsstationen in einer Fertigungsanlage und einer Stationsmatrix.

Die Erfindung betrifft eine Fertigungsstation (2) und ein Fertigungsverfahren für Werkstücke (6). Weiterhin wird eine Fertigungsanlage (1) mit mehreren solchen Fertigungsstationen (2) und ein Verfahren zum Konfigurierung der Fertigungsstation(en) (2) und der Fertigungsanlage (1) gezeigt.

Die Fertigungsanlage (1) weist mehrere modulare und standardisierte Fertigungsstationen (2) auf, die eine einheitliche konstruktive Grundausbildung und bevorzugt auch eine einheitliche Basisprogrammierung haben. Die einheitlichen Fertigungsstationen (2) sind im Grundaufbau prozessneutral und taktzeitneutral ausgebildet. Sie können auf der Basis dieses Grundaufbaus an die innerhalb einer Fertigungsstation (2) durchzuführenden ein oder mehreren spezifischen Fertigungsprozesse in vorrichtungstechnischer und programmtechnischer Hinsicht adaptiert und konfiguriert werden. Dies kann insbesondere durch Einsatz eines adaptierten Prozesstoolings (25,38) und durch eine auf der Basisprogrammierung aufgesetzte Prozessprogrammierung erfolgen.

Figur 1 zeigt in einer schematischen Ansicht eine solche standardisierte Fertigungsstation (2) und deren konstruktiven Grundaufbau. Die Fertigungsstation (2) weist mehrere, insbesondere zwei, integrierte Fertigungszellen (7,8) mit jeweils einem eigenen Prozessbereich (9) auf. Die Prozessbereiche (9) sind untereinander im konstruktiven und programmtechnischen Grundaufbau einheitlich ausgebildet.

In den Prozessbereichen (9) werden ein oder mehrere Werkstücke (6) bearbeitet, die in Figur 1 schematisch dargestellt sind. Die Werkstücke (6) sind bevorzugt als Karosserieteile ausgebildet. Diese können aus Metallblech oder anderen geeigneten Werkstoffen bestehen. Die Bearbeitungs- und Fertigungsprozesse können von beliebiger Art sein. Beispielsweise handelt es sich um Fügeprozesse, insbesondere Schweiß- oder Klebeprozesse, in denen mehrere Bauteile im Werkstück oder mit dem Werkstück (6) gefügt werden. Andere mögliche Prozesse betreffen das Umformen, Beschichten, spanende Bearbeiten oder sonstige Bearbeiten von Werkstücken (6).

Die Fertigungsstation (2) weist ferner eine für die Fertigungszellen (7,8) gemeinsame stationsinterne Transportlogistik (12) für die Werkstücke (6) auf. Die Transportlogistik (12) verbindet die Fertigungszellen (7,8) untereinander und verbindet sie gemeinsam auch mit der Außenwelt, insbesondere einem externen Logistikbereich (14) .

Die Fertigungsstation (2) können eine Umgrenzung (15) aufweisen, welche die Fertigungszellen (7,8) und die stationsinterne Transportlogistik (12) außenseitig umgibt. Die Umgrenzung (15) kann auch stationsintern vorhanden sein, wobei sie sich zwischen den Fertigungszellen (7,8) und der stationsinternen Transportlogistik (12) befindet und diese voneinander sicherungstechnisch trennt. Die Umgrenzung (15) weist eine Wandung (42) auf, die eine Schutzabtrennung der Fertigungsstation (2) nach außen und ggf. auch im Stationsinnenraum bildet.

In der Wandung (42) können mehrere Zugänge (26,27,35,43) vorhanden sein, die ggf. mit steuerbaren Verschlüssen (44) verschlossen werden können und die für Fördermittel (36,45,48) und ggf. für Personen vorgesehen sind. Derartige Verschlüsse (44) können als Türen oder Tore, insbesondere als Rolltore, ausgebildet sein. Stationsintern können z.B. verschließbare Zugänge (26) zwischen dem jeweiligen Prozessbereich (9) der Fertigungszellen (7,8) und der stationsinternen Transportlogistik (12) vorhanden sein. Für den Personenzutritt von außen können in der äußeren Umgrenzung (15) Zugänge (43) mit Türen und damit verbundener Sicherheitstechnik zur Vermeidung von Unfällen vorhanden sein. Bei Einsatz einer Mensch-Roboter-Kooperation oder - Kollaboration (MRK) kann auf eine Umgrenzung (15) verzichtet werden.

Die Prozessbereiche (9) weisen zur vorgenannten Vereinheitlichung jeweils eine einheitliche Aufnahmevorrichtung (20) für die Werkstücke (6) und mehrere Roboterarbeitsplätze (22) auf, die an der Peripherie der Aufnahmevorrichtung (20), insbesondere an verschiedenen und bevorzugt gegenüberliegenden Seiten der Aufnahmevorrichtung (20) angeordnet sind. An den Roboterarbeitsplätzen (22) kann bedarfsweise ein Industrieroboter (23) angeordnet sein. Die Industrieroboter (23) sind dabei innerhalb der Fertigungsstation (2) ebenfalls einheitlich ausgebildet. Vorzugsweise handelt es sich um Industrieroboter (23), die mehrere rotatorische und/oder translatorische Roboterachsen in beliebiger Zahl und Konfiguration aufweisen. Bevorzugt werden Gelenkarmroboter oder Knickarmroboter mit fünf oder mehr rotatorischen Achsen eingesetzt.

Die Vereinheitlichung der Roboterarbeitsplätze (22) erfolgt z.B. durch eine einheitliche Positionsvorgabe (24) für einen Industrieroboter (23) relativ zur Aufnahmevorrichtung (20). Die Positionsvorgabe kann z.B. durch bodenseitige Führungs- und Montagestellen gebildet werden, die für eine vorgegebene exakte Positionierung und Ausrichtung des hier angeordneten Industrieroboters (23) sorgen. Ein Industrieroboter (23) kann hierdurch je nach Prozesserfordernis bedarfsweise an einem Roboterarbeitsplatz (22) angeordnet werden und hat durch die Positionsvorgabe (24) sofort die exakte vorgegebene Position und Ausrichtung gegenüber der Aufnahmevorrichtung (20) .

Im gezeigten Ausführungsbeispiel sind beidseits der Aufnahmevorrichtung (20) jeweils vier Roboterarbeitsplätze (22) vorgesehen. Sie befinden sich an den Langseiten der bevorzugten rechteckigen Aufnahmevorrichtung (20).

Das Prozesstooling (25) zur Adaption des Prozessbereichs (9) an den jeweiligen Fertigungsprozess ist einerseits der Aufnahmevorrichtung (20) und andererseits den Industrierobotern (23) zugeordnet und kann bedarfsweise zur Anpassung an andere Fertigungsprozesse gewechselt werden. Der besagte Grundaufbau der Aufnahmevorrichtung (20) und der Roboterarbeitsplätze (22) bleibt dabei in den Prozessbereichen (9) gleich.

Das Prozesstooling (25) der Aufnahmevorrichtung (20) besteht z.B. aus Stütz- und Positioniermitteln sowie einer steuerbaren Spanneinrichtung für ein oder mehrere Werkstücke (6). Wie Figur 1 verdeutlicht, wird z.B. in der Fertigungszelle (7) ein einzelnes und großes Werkstück (6) bearbeitet, wobei die Aufnahmevorrichtung (20) ein entsprechendes einzelnes Prozesstooling (25) aufweist. In der Fertigungszelle (8) werden mehrere kleinere Werkstücke (6) nebeneinander auf der Aufnahmevorrichtung (20) bearbeitet, die hierfür ein entsprechend unterteiltes Prozesstooling (25) aufweist. In Figur 1 werden zwei Werkstücke (6) von gegenüberliegenden Industrierobotern (23) bearbeitet. Die Werkstückzahl kann alternativ größer sein, wobei die Werkstücke (6) von nur einem Industrieroboter (23) bearbeitet werden oder ein Industrieroboter (23) auch mehrere Werkstücke (6) gemeinsam bzw. nacheinander bearbeiten kann.

Das Prozesstooling (25) der Industrieroboter (23) besteht aus wechselbaren Prozesswerkzeugen, insbesondere Fügewerkzeugen oder ggf. auch Handlingwerkzeugen. Hierfür kann im Prozessbereich (9) ggf. auch ein Magazin für einen automatischen Werkzeugwechsel angeordnet sein.

Im Ausführungsbeispiel von Figur 1 ist die Aufnahmevorrichtung (20) stationär angeordnet und bevorzugt am Stationsboden abgestützt und montiert. Die Aufnahmevorrichtung (20) ist an die stationsinterne Transportlogistik (12) angeschlossen. Hierfür wird der Zutritt mittels des besagten Zugangs (26) mit einem z.B. als Rolltor ausgebildeten Verschluss (44) ermöglicht. Gemäß Figur 1 weist die Fertigungsstation (2) einen Steuerungsbereich (10) mit mehreren Steuerungsmodulen (28,29) für die Fertigungszellen (7,8) und die stationsinterne Transportlogistik (12) auf. Der Steuerungsbereich (10) ist z.B. an der äußeren Umgrenzung (15) und ggf. an deren Außenseite angeordnet.

Die Fertigungsstation (2) weist ferner einen Versorgungsbereich (11) mit mehreren Versorgungsmodulen (30,31) für Betriebsmittel und für Prozessmedien auf. Der Versorgungsbereich (11) kann ebenfalls an der äußeren Umgrenzung (15) und insbesondere an deren Außenseite angeordnet sein. Die Betriebsmittel können Energie, insbesondere elektrischen Leistungsstrom, Schweißstrom sowie Fluide, insbesondere Druckluft, Hydraulikflüssigkeit, Kühlmittel oder dgl. beinhalten. Die Prozessmedien können z.B. Klebstoff, Dichtmittel, Lack, Pulver oder andere, insbesondere fluidische Medien für die jeweiligen in der Fertigungsstation (2) durchgeführten Fertigungsprozesse betreffen.

Die Steuerungs- und Versorgungsbereiche (10, 11) sind vereinheitlicht und bilden ein Baukastensystem, in dem prozessspezifische Module bedarfsweise angeordnet und auch gewechselt werden können. Die besagten Bereiche (10,11) können außerdem standardisierte Schnittstellen für die Verbindung, insbesondere Leitungsverbindung, mit den jeweiligen Prozessstellen im Prozessbereich (9) aufweisen.

Die Steuerungsmodule (28,29) sind mit der Aufnahmevorrichtung (20) und den Roboterarbeitsplätzen sowie den dort ggf. angeordneten Industrierobotern (23) verbunden. Sie sind außerdem mit den Versorgungsmodulen (30,31) und mit der stationsinternen Transportlogistik (12) sowie den Verschlüssen (44) verbunden.

Ein Steuerungsmodul (28) kann z.B. eine oder mehrere Robotersteuerungen beinhalten. Ein anderes Steuerungsmodul (29) kann eine Ablaufsteuerung, eine sog. SPS-Steuerung, beinhalten. Die Steuerungsmodule (28,29) können eine einheitliche Basisprogrammierung aufweisen. Dies kann insbesondere ein einheitliches SPS-Betriebssystem und ggf. eine einheitliche Basisprogrammierung für die Roboterarbeitsplätze (22) bzw. die dortigen Industrieroboter (23) betreffen. In der Roboter-Basisprogrammierung sind z.B. die Positionen und die räumlichen Zuordnungen der Roboterarbeitsplätze (22) bzw. der dortigen Roboter (23) zu der Aufnahmevorrichtung (20) vorprogrammiert. Auf diese Basisprogrammierung kann die vorerwähnte adaptierte Prozessprogrammierung aufgesetzt werden. Hierfür sind entsprechende Softwareschnittstellen vorgesehen.

Gemäß Figur 1 sind die Fertigungszellen (7,8) in einer Reihe nebeneinander angeordnet. Sie haben z.B. einen rechteckigen Grundriss und stoßen mit ihren Schmalseiten direkt aneinander. Die stationsinterne Transportlogistik (12) erstreckt sich entlang der aufgereihten Fertigungszellen (7,8). Sie befindet sich bevorzugt an deren Außenseite und ist mit den Prozessbereichen (9) über die vorgenannten Zugänge (26) verbunden. Die stationsinterne Transportlogistik (12) ist zwischen den Fertigungszellen (7,8) und einer Außenfront (13) der Fertigungsstation (2) angeordnet. Die Außenfront (13) ist einem externen Logistikbereich (14) zugewandt. Sie ist bevorzugt parallel und mit Abstand zu der Zellenreihe (7,8) ausgerichtet.

Die stationsinterne Transportlogistik (12) kann in beliebig geeigneter Weise ausgebildet sein, um die vorgenannten Transportfunktionen zu ermöglichen. In der gezeigten Ausführungsform weist Sie dazu ein Transportmittel (36) für die Werkstücke (6) auf, das z.B. von mehreren, insbesondere zwei Industrierobotern (37) der vorgenannten Art gebildet wird. Hierbei handelt es sich um Handlingroboter mit einem bedarfsweise wechselbaren Prozesstooling (38), das z.B. von einem oder mehreren Greifwerkzeugen gebildet ist, die an die jeweiligen Werkstücke (6) adaptiert sind. Das Transportmittel (36) erstreckt sich entlang der aufgereihten Fertigungszellen (7, 8) und weist hierfür eine Fahrachse (39) für die Industrieroboter (37) auf. Diese können eine gemeinsame Fahrachse (39) oder eigene Fahrachsen haben. Hierbei ist durch eine entsprechende Fahrachsenausbildung ein Begegnungs- und Ausweichverkehr möglich, so dass jeder Handlingroboter (37) mehrere, insbesondere alle Fertigungszellen (7,8) erreichen kann.

Die stationsinterne Transportlogistik (12) weist ferner eine Eingangsschnittstelle (32) und eine hiervon funktional getrennte und distanzierte Ausgangsschnittstelle (33) für die getrennte Zu- und Abfuhr der Werkstücke (6) auf. Vorzugsweise sind zwei solcher Schnittstellen (32,33) vorhanden. Deren Zahl kann alternativ größer und bevorzugt geradzahlig sein. In einer weiteren Abwandlung ist eine einzelne kombinierte Eingangs- und Ausgangsschnittstelle (32) möglich.

Die Schnittstelle(n) (32,33) haben jeweils einen Zugang (35) an der Außenfront (13) für die Verbindung mit dem externen Logistikbereich (14) und einer hier angeordneten Fördertechnik (16). Der Zugang (35) ist als Öffnung in der äußeren Umgrenzung (15) ausgebildet und hat ggf. einen steuerbaren Verschluss (44) in Form eines Rolltors. Die Eingangs- und Ausgangsschnittstellen (32,33) können dadurch unabhängig voneinander von der externen Fördertechnik (16) angefahren werden.

Das Transportmittel (36) erstreckt sich zwischen den Eingangs- und Ausgangsschnittstellen (32,33) und bedient beide. Die Eingangs- und Ausgangsschnittstellen (32,33) sind bevorzugt an den Stationsrändern angeordnet. Dank der Ausweichtechnik können sie von allen Industrierobotern (37) des Transportmittels (36) angefahren werden.

Die Eingangs- und Ausgangsschnittstellen (32,33) weisen jeweils eine Ablage (34) für ein oder mehrere Werkstücke (36) in definierter Position und Anordnung auf. Das Transportmittel (36) kann die Werkstücke (6) von den Prozessbereichen (9) der Fertigungszellen (7,8) zu den Eingangs- und Ausgangsschnittstellen (32,33) und zurück sowie zwischen den Prozessbereichen (9) hin- und hertransportieren. Durch die stationsinterne Zellenlogistik können die innerhalb der Fertigungsstation (2) durchgeführten ein oder mehreren Fertigungsprozesse vom externen Fertigungs- und Fördertakt entkoppelt werden. Über die Schnittstellen (32,33) erfolgt die Anbindung an die externe Fördertechnik (16) und ggf. den externen Fördertakt.

Die stationsinterne Transportlogistik (12) kann ferner an der Außenfront (13) einen Aufnahmebereich (40) für Bauteile aufweisen. Die Bauteile können eventuell im Set oder in Mehrfachanordnung auf einem oder mehreren Bauteilträgern (41) angeordnet und im Aufnahmebereich (40) eingestellt werden. Der Aufnahmebereich (40) ist von außen für den externen Logistikbereich (14) und die dortige Fördertechnik (16) und stationsintern für das Transportmittel (36) zugänglich. Hierüber können die Bauteile den Fertigungszellen (7,8) und deren Prozessbereichen zugeführt werden. Der Aufnahmebereich (40) kann sich zwischen den Schnittstellen (32,33) bzw. deren Zugängen (35) erstrecken.

Die Bauteile können von einer externen Bauteilversorgung (19) stammen und über die vorgenannte Fördertechnik (16) zugeführt und im Aufnahmebereich (40) eingestellt werden. Eine solche Bauteilversorgung (19) ist in Figur 4 dargestellt. Sie beinhaltet ein Magazin für Bauteile, insbesondere damit bestückte Bauteilträger (41), die mittels Laderobotern (49) auf die im externen Logistikbereich (14) verkehrende Fördertechnik (16) geladen werden.

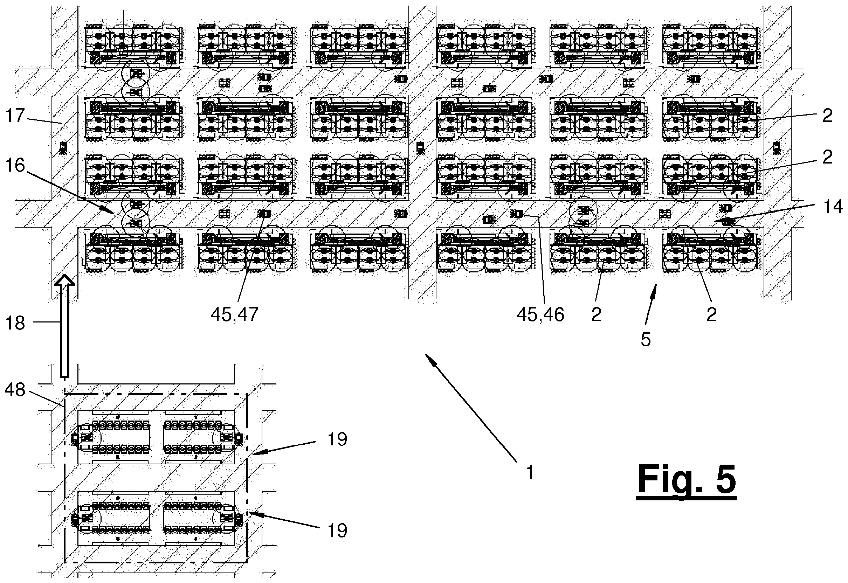

In der vorgenannten Fertigungsanlage (1) können mehrere der vorbeschriebenen vereinheitlichten und standardisierten Fertigungsstationen (2) angeordnet sein. Vorzugsweise handelt es sich hierbei um eine Vielzahl von zehn, zwanzig und mehr Standardmodulen (2). Sie sind in einer vorgegebenen gegenseitigen Zuordnung angeordnet, wobei dies bevorzugt eine regelmäßige Stationsmatrix (5) ist, wie sie in Figur 5 und 6 ausschnittsweise dargestellt ist.

In der Fertigungsanlage (1) können außerdem eine oder mehrere weitere Fertigungsstationen (3,4) angeordnet und in die Logistik (14) bzw. Fördertechnik (16) eingebunden sein. Figur 2 zeigt hierfür beispielhaft eine Fertigungsstation (3), die für eine Sonderfertigung von Werkstücken (6) vorgesehen ist. Dies können z.B. Prototypen, Nischenprodukte, Kleinserien oder dgl. sein.

Die Sonder-Fertigungsstation (3) kann den gleichen vorbeschriebenen Aufbau wie die standardisierte Fertigungsstation (2) haben. Darüber hinaus können verschiedene Anpassungen an die Erfordernisse einer Sonderfertigung vorgesehen sein. Zum einen kann eine instationäre Aufnahmevorrichtung (21) eingesetzt werden, die bei Bedarf wechselbar ist und die z.B. durch einen verschließbaren (44) Zugang (27) in den Prozessbereich (9) einer Fertigungszelle (7,8) eingeführt und abgeführt werden kann. Der Zugang (27) befindet sich an der äußeren Umgrenzung (15) und ist dabei an der Stationsrückseite angeordnet, die der Außenfront (13) gegenüberliegt. Eine solche instationäre Aufnahmevorrichtung (21) kann alternativ auch bei der standardisierten Fertigungsstation (2) eingesetzt werden.

Die instationäre Aufnahmevorrichtung (21) kann mittels eines geeigneten Fördermittels, insbesondere eines Flurfördermittels (45) transportiert und an der vorgegebenen Position innerhalb des jeweiligen Prozessbereichs (9) abgesetzt und aufgenommen werden. Ein solches Flurfördermittel (45) kann z.B. als omnidirektional bewegliches Fördergerät (47) gemäß der EP 2 137 053 B1 ausgebildet sein, das nachfolgend abgekürzt als Omnimove bezeichnet wird. Ein solches Omnimove (47) kann ferngesteuert sein oder eigenständig einen vorprogrammierten Fahrweg abfahren.

Ferner kann die Sonder-Fertigungsstation (3) eine direkt zugeordnete, insbesondere angebaute Bauteilversorgung (19) aufweisen, die ggf. mehrfach vorhanden und an den jeweiligen Prozessbereich (9) einer Fertigungszelle (7,8) angeschlossen ist. Darüber hinaus kann die gleiche vorbeschriebene Anbindung an der Außenfront (13) an einen externen Logistikbereich (14) bestehen.

Figur 3 und 5 verdeutlichen die Fertigungsanlage (1) und die Anbindung der standardisierten Fertigungsstationen (2) an die externe Logistik (14) und die dortige Fördertechnik (16). Die externe Logistik (14) weist ein Wegenetz (17) auf, auf dem die externe Fördertechnik (16) verkehrt. Das Wegenetz (17) umfasst eine Vielzahl von einander kreuzenden Förderwegen. Die standardisierten Fertigungsstationen (2) sind jeweils mit ihrer Außenfront (13) an das Wegenetz (17) zugewandt und angeschlossen. In der regulären Stationsmatrix (5) sind dabei die Rückseiten der Fertigungsstationen (2) einander zugekehrt. In ähnlicher Weise können auch eine oder mehrere der vorbeschriebenen Sonder-Fertigungsstationen (3) eingebunden sein.

Die Fördertechnik (16) kann flurgebunden und/oder aufgeständert sein. Sie kann Flurfördermittel (45) und/oder Bahnfördermittel (48), z.B. eine in Figur 5 angedeutete Hängebahn, aufweisen. Vorzugsweise kommen automatisierte und programmierbare Flurfördermittel (45) und/oder Bahnfördermittel (48) zum Einsatz. Diese verbinden die Eingangs- und Ausgangsschnittstellen (32,33) verschiedener Fertigungsstationen (2) untereinander. Sie können dabei durch die Zugänge (35) zu den Ablagen (34) fahren. Sie können ferner eine Verbindung mit einer in Figur 5 gezeigten externen Bauteilversorgung (19) schaffen. Die Fertigungsstationen (2,3) haben in der Stationsmatrix (5) somit einen gemeinsamen externen Logistikbereich (14) und eine fördertechnische Verkettung (18). Zudem kann eine datentechnische sowie programmtechnische Verkettung der Stationen (2,3) und der Fördertechnik (16) bestehen.

Die Flurfördermittel (45) und/oder Bahnfördermittel (48) haben bevorzugt einen eigenen Antrieb und sind individuell steuerbar. Insbesondere die Flurfördermittel (45) können lenkbar sein. Sie können ihren Weg mit Hilfe Leitmitteln, z.B. induktiven Führungen, oder mit einer eigenen Orientierung mittels Kamerasystemen, GPS, sensorischer Umgebungserfassung oder dgl. suchen und verfolgen. Die Flurfördermittel (45) und/oder Bahnfördermittel (48) können im Wegenetz (17) der Fertigungsanlage (1) vorzugsweise jede Fertigungsstation (2,3,4) und die Bauteilversorgung (19) erreichen.

Die Fördertechnik (16) kann ein Transportliniensystem aufweisen, in dem die automatischen Fördermittel (45,48) liniengebunden verkehren. Sie können sich dabei zwischen prozesstechnisch untereinander und ggf. mit der Bauteilversorgung (19) verketteten Fertigungsstationen (2,3,4) bewegen. Das Transportliniensystems kann sich in mehrere ringförmig geschlossene Transportlinien gliedern, in denen jeweils ein oder mehrere Fördermittel liniengebunden und bevorzugt in einem Kreislauf verkehren. Die in Figur 3 gezeigte Verkettung (18) der schräg einander gegenüber liegenden Fertigungsstationen (2) kann ein Teil einer solchen Transportlinie sein. An der Transportlinie können eine oder mehrere Fertigungsstationen (2,3,4) angeschlossen sein. Innerhalb des Logistikbereichs (14) bzw. der Fördertechnik (16) können eine oder mehrere Transportlinien existieren. Ferner können mehrere Transportlinien verkettet sein, wobei die Verkettung und Werkstückübergabe z.B. an einer gemeinsamen Station, z.B. einer Fertigungsstation (2,3), erfolgt.

Figur 3 verdeutlicht verschiedene Ausführungsformen für flurgebundene Fördermittel (45). Diese können zum einen als ein Omnimove (47) ausgebildet sein. Auf diesem können größere und schwerere Werkstücke (6) und ggf. auch andere Lasten, z.B. Roboter, transportiert werden. Ferner können Flurfördermittel (45) als frei programmierbare und selbstfahrende Transportfahrzeuge (46), sogenannte FTS oder AGV, ausgebildet sein. Zudem ist es möglich, selbstfahrende oder auf einem Omnimove (47) angeordnete Laderoboter (49) einzusetzen. Die Wege oder Bahnen im Wegenetz (17) können in einem regelmäßigen Raster angeordnet sein. Sie können so breit sein, dass mehrere Flur- oder Bahnfördermittel (45,48) im Gegenverkehr bewegt werden können.

Wie Figur 6 verdeutlicht, kann die Fertigungsanlage (1) auch eine Fertigungsstation (4) für den Tryout aufweisen, die der Erstellung einer prozessspezifischen Stationsanpassung auf der Basis des einheitlichen Grundaufbaus und der einheitlichen Basisprogrammierung dient. Die Tryout-Station (4) kann hierfür die gleiche Grundausbildung wie die vorbeschriebene einheitliche Fertigungsstation (2) von Figur 1 haben. Die Tryout-Station (4) ist mit den Fertigungsstationen (2) in der Fertigungsanlage (1) durch kabelgebundene oder kabellose Datenleitungen verbunden, die eine Übermittlung der Daten der in der Tryout-Station (4) entwickelten Prozessprogrammierung erlauben.

In der Tryout-Station (4) kann somit für jede der standardisierten Fertigungsstationen (2) eine spezifische Prozessprogrammierung erstellt und ausgetestet werden, wobei auch das jeweilige Prozesstooling (25,38) zum Einsatz kommt. Dieses Entwickeln und Austesten kann während des Serienbetriebs der Fertigungsanlage (1) erfolgen, wobei die Daten der Prozessprogrammierung bedarfsweise in der Tryout-Station (4) oder ggf. im jeweiligen Steuerbereich (10) der Fertigungsstationen (2) gespeichert werden können. Bei einer Umrüstung der Fertigungsanlage (1) und einiger oder aller Fertigungsprozesse kann kurzfristig die neue Prozessprogrammierung eingespielt und in der betreffenden Fertigungsstation (2) in Verbindung mit einem entsprechend getauschten Prozesstooling (25,38) sofort umgesetzt werden. Eine entsprechende Vorgehensweise ist auch bei den Sonder-Fertigungsstationen (3) möglich.

Die Tryout-Station (4) kann als zusätzliche Station in der Fertigungsanlage (1) vorgesehen sein und kann allein diesen Entwicklungs- und Testzwecken dienen. Sie kann alternativ in die Serienfertigung eingebunden und dazu entsprechend der Fertigungsstation (2,3) ausgebildet sein, wobei sie lediglich zeitweise für den Tryout-Betrieb aus dem Stationenverbund ausgekoppelt wird.

Die Fertigungsstationen (2,3,4) haben in den bevorzugten Ausführungsformen einen rechteckigen Grundriss und eine lineare Ausrichtung der Fertigungszellen (7,8) und der stationsinternen Transportlogistik (12). Alternativ ist eine andere, z.B. gebogene bzw. ringartige Anordnung und Ausrichtung möglich. Innerhalb einer Fertigungsanlage (1) können auch noch andere als die vorbeschriebenen Fertigungsstationen eingebunden sein. Dies können konventionelle Stationen sein.

### BEZUGSZEICHENLISTE

- 1: Fertigungsanlage
- 2: Fertigungsstation, Standardmodul
- 3: Fertigungsstation, Sonderfertigung
- 4: Fertigungsstation, Tryout
- 5: Stationsmatrix
- 6: Werkstück, Karosserieteil
- 7: Zelle, Fertigungszelle
- 8: Zelle, Fertigungszelle
- 9: Prozessbereich
- 10: Steuerungsbereich
- 11: Versorgungsbereich
- 12: Transportlogistik intern, Zellenlogistik
- 13: Außenfront
- 14: Logistikbereich extern
- 15: Umgrenzung, Schutzabtrennung, Einhausung
- 16: Fördertechnik
- 17: Wegenetz
- 18: Verkettung
- 19: Bauteilversorgung
- 20: Aufnahmevorrichtung stationär
- 21: Aufnahmevorrichtung instationär
- 22: Roboterarbeitsplatz
- 23: Industrieroboter
- 24: Positionsvorgabe
- 25: Prozesstooling, Prozesswerkzeug
- 26: Zugang für Zellenlogistik
- 27: Zugang für bewegliche Aufnahmevorrichtung
- 28: Steuerung, Steuerungsmodul Roboter
- 29: Steuerung, Steuerungsmodul SPS
- 30: Versorgungsmodul für Betriebsmittel
- 31: Versorgungsmodul für Medien
- 32: Schnittstelle Eingang
- 33: Schnittstelle Ausgang
- 34: Ablage
- 35: Zugang für externe Fördertechnik
- 36: Transportmittel
- 37: Industrieroboter, Handlingroboter
- 38: Prozesstooling, Greifwerkzeug
- 39: Führung, Fahrachse
- 40: Aufnahmebereich
- 41: Bauteilträger
- 42: Wandung, Zaun
- 43: Zugang für Person
- 44: Verschluss, Türe, Rolltor
- 45: Fördermittel, Flurfördermittel
- 46: Transportfahrzeug selbstfahrend, FTS
- 47: Fördergerät omnidirektional beweglich, Omnimove
- 48: Fördermittel, Bahnfördermittel, Hängebahn
- 49: Laderoboter

## Patentansprüche

1. Fertigungsstation für Werkstücke (6), insbesondere Karosserieteile, wobei die Fertigungsstation (2) modular ausgebildet ist und mehrere, insbesondere zwei, integrierte Fertigungszellen (7,8) mit jeweils einem eigenen Prozessbereich (9) aufweist, wobei die Prozessbereiche (9) untereinander im Grundaufbau einheitlich ausgebildet sind und
- die Prozessbereiche (9) jeweils eine einheitliche Aufnahmevorrichtung (20,21) für die Werkstücke (6) und an deren Peripherie mehrere einheitlich positionierte und vorbereitete Roboterarbeitsplätze (22) aufweisen und
- an den mehreren, Roboterarbeitsplätzen (22) eine einheitliche Positionsvorgabe für einen dort bedarfsweise anzuordnenden Industrieroboter vorgesehen ist und wobei
- die Fertigungsstation (2) eine für die Fertigungszellen (7,8) gemeinsame, stationsinterne Transportlogistik (12) für die Werkstücke (6) aufweist, welche die Fertigungszellen (7,8) untereinander sowie gemeinsam mit der Außenwelt verbindet.

2. Fertigungsstation nach Anspruch 1, **dadurch gekennzeichnet, dass** die stationsinterne Transportlogistik (12) sich entlang der aufgereihten Fertigungszellen (7,8) erstreckt und zwischen den Fertigungszellen (7,8) und einer Außenfront (13) der Fertigungsstation (2) angeordnet ist, wobei die Außenfront (13) einem externen Logistikbereich (14) zugewandt ist.

3. Fertigungsstation nach Anspruch 1 oder 2, **dadurch gekennzeichnet, dass** die stationsinterne Transportlogistik (12) ein Transportmittel (36) für die Werkstücke (6) sowie eine Eingangsschnittstelle (32) und eine davon distanzierte Ausgangsschnittstelle (33) oder eine einzelne kombinierte Eingangs- und Ausgangsschnittstelle (32) für die Zu- und Abfuhr der Werkstücke (6) mit jeweils einem Zugang (35) an der Außenfront (13) für die Verbindung mit einem externen Logistikbereich (14) aufweist.

4. Fertigungsstation nach Anspruch 1, 2 oder 3, **dadurch gekennzeichnet, dass** die Fertigungsstation (2) eine Umgrenzung (15) aufweist, welche die Fertigungszellen (7,8) und die stationsinterne Transportlogistik (12) außenseitig umgibt und ggf. intern voneinander abtrennt, wobei die Umgrenzung (15) eine Wandung (42) und mehrere verschließbare (44) Zugänge (26,27,35,43) für Fördermittel (36,45,48) und ggf. für Personen aufweist.

5. Fertigungsstation nach einem der vorhergehenden Ansprüche, **dadurch gekennzeichnet, dass** an den Roboterarbeitsplätzen (22) einheitlich ausgebildete Industrieroboter (23) angeordnet sind.

6. Fertigungsanlage mit Fertigungsstationen für Werkstücke (6), insbesondere Karosserieteile, **dadurch gekennzeichnet, dass** die Fertigungsanlage (1) mehrere untereinander einheitliche Fertigungsstationen (2) aufweist, die gemäß mindestens einem der Ansprüche 1 bis 5 ausgebildet sind.

7. Fertigungsanlage nach Anspruch 6, **dadurch gekennzeichnet, dass** die Fertigungsstationen (2) an einen gemeinsamen externen Logistikbereich (14) mit einer Fördertechnik (16) und einem Wegenetz (17) angeschlossen sind.

8. Fertigungsanlage nach Anspruch 6 oder 7, **dadurch gekennzeichnet, dass** die Fertigungsstationen (2) in einer bevorzugt regelmäßigen Stationsmatrix (5) angeordnet und verkettet sind.

9. Fertigungsanlage nach Anspruch 7 oder Anspruch 7 und 8, **dadurch gekennzeichnet, dass** die Fördertechnik (16) automatisierte und programmierbare Fördermittel, insbesondere Flurfördermittel (45) und/oder Bahnfördermittel (48) (45,48), aufweist, welche die Eingangs- und Ausgangsschnittstellen (32,33) verschiedener Fertigungsstationen (2) untereinander und ggf. mit einer Bauteilversorgung (19) verbinden.

10. Fertigungsanlage nach Anspruch 9, **dadurch gekennzeichnet, dass** die Fördertechnik (16) ein Transportliniensystem aufweist, in dem ein oder mehrere automatische Fördermittel (45,48) liniengebunden verkehren.

11. Fertigungsanlage nach einem der Ansprüche 6 bis 10, **dadurch gekennzeichnet, dass** die Fertigungsanlage (1) außer den für die Serienproduktion standardisierten, einheitlichen Fertigungsstationen (2) eine zusätzliche Fertigungsstation (3) für Sonderfertigungen, insbesondere Prototypenfertigung, aufweist.

12. Fertigungsanlage nach einem der Ansprüche 6 bis 11, **dadurch gekennzeichnet, dass** die Fertigungsanlage (1) eine Fertigungsstation (4) für den Tryout aufweist, die gemäß der einheitlichen Fertigungsstationen (2) ausgebildet ist und die mit den Fertigungsstationen (2) in der Fertigungsanlage (1), insbesondere in der Stationsmatrix (5), durch Datenleitungen für die Übermittlung der Prozessprogrammierung verbunden ist.

13. Verfahren zum Konfigurieren einer Fertigungsstation für Werkstücke (6), insbesondere Karosserieteile, für einen Fertigungsprozess, **dadurch gekennzeichnet, dass** die Fertigungsstation (2) nach einem der Ansprüche 1 bis 5 ausgestaltet und im konstruktiven Grundaufbau standardisiert und prozessneutral ausgebildet und mit einer Basisprogrammierung versehen wird, wobei sie zur Konfiguration und Prozessanpassung ein Prozesstooling (25,38) und eine aufgesetzte Prozessprogrammierung erhält.

14. Verfahren nach Anspruch 13, **dadurch gekennzeichnet, dass** die Konfiguration und Prozessanpassung, insbesondere die aufgesetzte Prozessprogrammierung, in einer Tryout-Fertigungsstation (4) entwickelt und getestet wird, wobei die Prozessprogrammierung anschließend an eine standardisierte Fertigungsstation (2), insbesondere deren Steuerungsbereich (10) übermittelt wird.

15. Verfahren nach Anspruch 13 oder 14, **dadurch gekennzeichnet, dass** die Konfiguration und Prozessanpassung, insbesondere die aufgesetzte Prozessprogrammierung, von mehreren Fertigungsstationen (2) mit unterschiedlichen Prozessen in einer Fertigungsanlage (1) in einer gemeinsamen Tryout-Fertigungsstation (4) entwickelt und getestet wird, wobei die Prozessprogrammierung anschließend an die jeweilige standardisierte Fertigungsstation (2), insbesondere deren Steuerungsbereich (10) übermittelt wird.

## Claims

1. Manufacturing station for workpieces (6), in particular vehicle body parts, wherein the manufacturing station (2) is of modular design and has a plurality of, in particular two, integrated manufacturing cells (7, 8) with in each case a dedicated process region (9), wherein the process regions (9) are designed to be uniform with one another in terms of their basic construction, and
- the process regions (9) each have a uniform receiving device (20, 21) for the workpieces (6) and at their periphery a plurality of uniformly positioned and prepared robot workstations (22), and
- at the plurality of robot workstations (22) there is provided a uniform position preset for an industrial robot to be arranged there as required, and wherein
- the manufacturing station (2) has a station-internal transport logistics (12) for the workpieces (6) that is common to the manufacturing cells (7, 8) and that connects the manufacturing cells (7, 8) to one another and together to the external environment.

2. Manufacturing station according to Claim 1, **characterized in that** the station-internal transport logistics (12) extends along the lined-up manufacturing cells (7, 8) and is arranged between the manufacturing cells (7, 8) and an outer front (13) of the manufacturing station (2), wherein the outer front (13) faces an external logistics region (14).

3. Manufacturing station according to Claim 1 or 2, **characterized in that** the station-internal transport logistics (12) has a transport means (36) for the workpieces (6) and also an input interface (32) and, spaced apart therefrom, an output interface (33) or an individual combined input and output interface (32) for feeding and discharging the workpieces (6) with in each case an access (35) on the outer front (13) for connection to an external logistics region (14).

4. Manufacturing station according to Claim 1, 2 or 3, **characterized in that** the manufacturing station (2) has a boundary (15) which surrounds the manufacturing cells (7, 8) and the station-internal transport logistics (12) on the outside and, where appropriate, separates them from one another internally, wherein the boundary (15) has a wall (42) and a plurality of closable (44) accesses (26, 27, 35, 43) for conveying means (36, 45, 48) and, where appropriate, for persons.

5. Manufacturing station according to one of the preceding claims, **characterized in that** uniformly designed industrial robots (23) are arranged at the robot workstations (22).

6. Manufacturing installation having manufacturing stations for workpieces (6), in particular vehicle body parts, **characterized in that** the manufacturing installation (1) has a plurality of mutually uniform manufacturing stations (2) which are designed according to at least one of Claims 1 to 5.

7. Manufacturing installation according to Claim 6, **characterized in that** the manufacturing stations (2) are connected to a common external logistics region (14) having a conveying system (16) and a path network (17).

8. Manufacturing installation according to Claim 6 or 7, **characterized in that** the manufacturing stations (2) are arranged and interlinked in a preferably regular station matrix (5).

9. Manufacturing installation according to Claim 7 or Claims 7 and 8, **characterized in that** the conveying system (16) has automated and programmable conveying means, in particular floor conveying means (45) and/or track conveying means (48) (45, 48) which connect the input and output interfaces (32, 33) of different manufacturing stations (2) to one another and, where appropriate, to a component supply (19).

10. Manufacturing installation according to Claim 9, **characterized in that** the conveying system (16) has a transport line system in which one or more automatic conveying means (45, 48) travel line-bound.

11. Manufacturing installation according to one of Claims 6 to 10, **characterized in that**, apart from the uniform manufacturing stations (2) standardized for series production, the manufacturing installation (1) has an additional manufacturing station (3) for special manufacturing operations, in particular prototype manufacturing.

12. Manufacturing installation according to one of Claims 6 to 11, **characterized in that** the manufacturing installation (1) has a tryout manufacturing station (4) which is designed according to the uniform manufacturing stations (2) and which is connected to the manufacturing stations (2) in the manufacturing installation (1), in particular in the station matrix (5), by data lines for the transmission of the process programming.

13. Method for configuring a manufacturing station for workpieces (6), in particular vehicle body parts, for a manufacturing process, **characterized in that** the manufacturing station (2) is configured according to one of Claims 1 to 5 and, in terms of its structural basic construction, is designed in a standardized and process-neutral manner and is provided with a basic programming, wherein, for configuration and process adaptation, it receives a process tooling (25, 38) and a superimposed process programming.

14. Method according to Claim 13, **characterized in that** the configuration and process adaptation, in particular the superimposed process programming, is developed and tested in a tryout manufacturing station (4), wherein the process programming is then transmitted to a standardized manufacturing station (2), in particular to the control region (10) thereof.

15. Method according to Claim 13 or 14, **characterized in that** the configuration and process adaptation, in particular the superimposed process programming, of a plurality of manufacturing stations (2) with different processes in a manufacturing installation (1) is developed and tested in a common tryout manufacturing station (4), wherein the process programming is then transmitted to the respective standardized manufacturing station (2), in particular to the control region (10) thereof.

## Revendications

1. Poste de fabrication pour des pièces à travailler (6), en particulier des pièces de carrosserie, dans lequel le poste de fabrication (2) est réalisé de manière modulaire et présente plusieurs, en particulier deux, cellules de fabrication intégrées (7, 8) avec respectivement leur propre zone de processus (9), les zones de processus (9) étant réalisées de manière uniforme entre elles au niveau de la structure de base, et
- les zones de processus (9) présentent respectivement un dispositif de logement uniforme (20, 21) pour les pièces à travailler (6) et présentent au niveau de leur périphérie plusieurs postes de travail de robot préparés (22), et
- au niveau des plusieurs postes de travail de robot (22), une spécification de position uniforme est prévue pour un robot industriel à disposer à cet endroit au besoin, et dans lequel
- le poste de fabrication (2) présente une logistique de transport (12), interne au poste et commune aux cellules de fabrication (7, 8), pour les pièces à travailler (6) qui relie les cellules de fabrication (7, 8) entre elles et les relie ensemble au monde extérieur.

2. Poste de fabrication selon la revendication 1, **caractérisé en ce que** la logistique de transport (12) interne au poste s'étend le long des cellules de fabrication (7, 8) alignées et est disposée entre les cellules de fabrication (7, 8) et un front extérieur (13) du poste de fabrication (2), le front extérieur (13) étant tourné vers une zone de logistique externe (14) .

3. Poste de fabrication selon la revendication 1 ou 2, **caractérisé en ce que** la logistique de transport (12) interne au poste présente un moyen de transport (36) pour les pièces à travailler (6) ainsi qu'une interface d'entrée (32) et une interface de sortie (33) à distance de celle-ci ou une seule interface d'entrée et de sortie combinée (32) pour l'arrivée et l'évacuation des pièces à travailler (6) avec respectivement un accès (35) sur le front extérieur (13) pour la liaison avec une zone de logistique externe (14).

4. Poste de fabrication selon la revendication 1, 2 ou 3, **caractérisé en ce que** le poste de fabrication (2) présente une délimitation (15) qui entoure les cellules de fabrication (7, 8) et la logistique de transport (12) interne au poste à l'extérieur et les sépare éventuellement à l'intérieur, la délimitation (15) présentant une paroi (42) et plusieurs accès (26, 27, 35, 43) verrouillables (44) pour des moyens de convoyage (36, 45, 48) et éventuellement pour des personnes.

5. Poste de fabrication selon l'une quelconque des revendications précédentes, **caractérisé en ce que** des robots industriels (23) réalisés de manière uniforme sont disposés aux postes de travail de robot (22).

6. Usine de fabrication, comprenant des postes de fabrication pour des pièces à travailler (6), en particulier des pièces de carrosserie, **caractérisée en ce que** l'usine de fabrication (1) présente plusieurs postes de fabrication (2) uniformes entre eux qui sont réalisés selon au moins l'une des revendications 1 à 5.

7. Usine de fabrication selon la revendication 6, **caractérisée en ce que** les postes de fabrication (2) sont reliés à une zone de logistique externe commune (14) dotée d'un système de convoyage (16) et un réseau de chemins (17).

8. Usine de fabrication selon la revendication 6 ou 7, **caractérisée en ce que** les postes de fabrication (2) sont disposés et enchaînés dans une matrice de postes (5) de préférence régulière.

9. Usine de fabrication selon la revendication 7 ou les revendications 7 et 8, **caractérisée en ce que** le système de convoyage (16) présente des moyens de convoyage automatisés et programmables, en particulier des moyens de convoyage au sol (45) et/ou des moyens de convoyage à bande (48) (45, 48) qui relient les interfaces d'entrée et de sortie (32, 33) de différents postes de fabrication (2) entre elles et les relient éventuellement à un approvisionnement en composants (19) .

10. Usine de fabrication selon la revendication 9, **caractérisée en ce que** le système de convoyage (16) présente un système de lignes de transport dans lequel circulent un ou plusieurs moyens de convoyage automatiques (45, 48) sur des lignes.

11. Usine de fabrication selon l'une quelconque des revendications 6 à 10, **caractérisée en ce que** l'usine de fabrication (1) présente outre les postes de fabrication (2) uniformes, standardisés pour la production en série, un poste de fabrication (3) supplémentaire pour des fabrications spéciales, en particulier la fabrication de prototypes.

12. Usine de fabrication selon l'une quelconque des revendications 6 à 11, **caractérisée en ce que** l'usine de fabrication (1) présente un poste de fabrication (4) pour les essais qui est réalisé selon les postes de fabrication uniformes (2) et qui est relié aux postes de fabrication (2) dans l'usine de fabrication (1), en particulier dans la matrice de postes (5), par des lignes de données pour la transmission de la programmation de processus.

13. Procédé permettant de configurer un poste de fabrication pour des pièces à travailler (6), en particulier des pièces de carrosserie, pour un processus de fabrication, **caractérisé en ce que** le poste de fabrication (2) est configuré selon l'une quelconque des revendications 1 à 5 et est standardisé au niveau de la structure de construction de base et réalisé de manière neutre pour le processus et est équipé d'une programmation de base, dans lequel il comprend pour la configuration et l'adaptation de processus un outillage de processus (25, 38) et une programmation de processus ajoutée.

14. Procédé selon la revendication 13, **caractérisé en ce que** la configuration et l'adaptation au processus, en particulier la programmation de processus ajoutée, sont développées et testées sur un poste de fabrication d'essai (4), la programmation de processus étant ensuite transmise à un poste de fabrication (2) standardisé (2), en particulier à sa zone de commande (10) .

15. Procédé selon la revendication 13 ou 14, **caractérisé en ce que** la configuration et l'adaptation de processus, en particulier la programmation de processus ajoutée, sont développées et testées par plusieurs postes de fabrication (2) dotés de différents processus dans une usine de fabrication (1) dans un poste de fabrication d'essai (4) commun, la programmation de processus étant ensuite transmise au poste de fabrication (2) standardisé respectif, en particulier à sa zone de commande (10).
